# EUROPÄISCHE PATENTSCHRIFT

(11) **EP 2 593 692 B1**
(45) Veröffentlichungstag und Bekanntmachung des Hinweises auf die Patenterteilung: **20.12.2017**
(21) Anmeldenummer: 11787575.7
(22) Anmeldetag: 22.06.2011
(51) Int. Cl.: F16D 3/223

(54) **GELENK**
JOINT
ARTICULATION

(30) Priorität: 27.07.2010 DE 102010032419; 14.07.2010 DE 102010027059
(43) Veröffentlichungstag der Anmeldung: 22.05.2013
(73) Patentinhaber: Neumayer Tekfor Engineering GmbH, 77756 Hausach (DE); hofer-pdc GmbH, 70327 Stuttgart (DE)
(72) Erfinder: LUTZ, Matthias, 72070 Tübingen (DE); GREGOR, Thomas, 97280 Remlingen (DE)
(86) Internationale Anmeldenummer: PCT/DE2011/001366
(87) Internationale Veröffentlichungsnummer: WO 2012/006993

(56) Entgegenhaltungen:
- DE-C1- 3 700 868
- DE-C1- 3 939 531
- DE-C2- 4 222 205
- US-A1- 2010 216 558

## Beschreibung

Die Erfindung bezieht sich auf ein Gelenk, mit einer Innennabe, welche eine Längsachse und innere Kugelbahnen aufweist, mit einer Außennabe, welche eine Längsachse und äußere Kugelbahnen aufweist, wobei die inneren Kugelbahnen und die äußeren Kugelbahnen jeweils paarweise einander zugeordnet sind, mit einem Käfig, welcher umfangsverteilte Fenster aufweist und welcher zwischen der Innennabe und der Außennabe angeordnet ist, und mit Kugeln, welche in den Fenstern des Käfigs und in den Paaren der inneren Kugelbahnen und der äußeren Kugelbahnen angeordnet sind und welche von dem Käfig in einer Ebene gehalten werden, wobei die Tangentialebenen an den Kontaktpunkten der Kugeln mit den inneren Kugelbahnen und den äußeren Kugelbahnen einen Neigungswinkel bilden, wobei die inneren Kugelbahnen jeweils einen aktiven Abschnitt aufweisen, in welchem sich die Kugeln bewegen, und wobei die äußeren Kugelbahnen jeweils einen aktiven Abschnitt aufweisen, in welchem sich die Kugeln bewegen. Weiterhin weisen zumindest die aktiven Abschnitte der inneren Kugelbahnen jeweils eine entlang der zugeordneten Längsachse sich im Wesentlichen ständig ändernde Krümmung und weisen zumindest die aktiven Abschnitte der äußeren Kugelbahnen jeweils eine entlang der zugeordneten Längsachse sich im Wesentlichen ständig ändernde Krümmung auf. Bei dem Gelenk handelt es sich beispielsweise um ein Festgelenk oder insbesondere um ein Gegenbahngelenk mit wechselweise angeordneten Bahnen. Die Erfindung gilt jedoch auch für andere Kugelgleichlaufgelenke.

Im Stand der Technik sind die Kugelbahnen in der Innen- und Außennabe zumeist aus Kreissegmenten konstruiert. Unterschiedliche Gelenke und Ausgestaltungen von Kugelbahnen finden sich z.B. in den Dokumenten DE 10 2004 018 721 A1, DE 42 22 205 C2, DE 39 39 531 C1 oder DE 202 21 755 U1. Das Dokument DE 42 22 205 C2 offenbart zum Beispiel den Oberbegrif von Anspruch 1. Die Ausgestaltung des Gelenks in Bezug auf den Neigungswinkel hängt von unterschiedlichen Kriterien ab. Für die Steuerung der Kugeln sollte ständig ein Neigungswinkel vorliegen, welcher größer als der Selbsthemmungswinkel ist. Weiterhin sollte der Neigungswinkel möglichst klein sein, um Wirkungsgradverluste zu vermeiden, welche üblicherweise mit erhöhter Pressung an den Kontaktpunkten einhergehen. Somit sollte der Neigungswinkel einerseits möglichst groß, andererseits jedoch möglichst klein
sein. Die Erhöhung des Wirkungsgrades ist jedoch insbesondere relevant für die aktuellen Bestrebungen der Reduktion des CO₂-Ausstosses und der Reduktion des Treibstoffbedarfs.

Der Erfindung liegt die Aufgabe zugrunde, ein Gelenk mit einem verbesserten Wirkungsgrad vorzuschlagen.

Die Erfindung löst die Aufgabe dadurch, dass die Krümmung der aktiven Abschnitte der inneren Kugelbahnen und die Krümmung der aktiven Abschnitte der äußeren Kugelbahnen derartig ausgestaltet und aufeinander abgestimmt sind, dass der Neigungswinkel zumindest zwischen den Zuständen des vollständig gestreckten Gelenks und des maximal gebeugten Gelenks im Wesentlichen konstant ist, wobei die Krümmung zumindest der aktiven Abschnitte der inneren Kugelbahnen und die Krümmung zumindest der aktiven Abschnitte der äußeren Kugelbahnen zumindest annähernd durch eine zumindest stückweise elliptische mathematische Funktion beschreibbar sind. Die Krümmung der Bahnen ändert sich somit jeweils längs der Längsachse der jeweiligen Nabe. Die Erfindung baut auf der Erkenntnis, dass sich bei den Kugelbahnen des Standes der Technik der Neigungswinkel bei Beugung des Gelenks verändert. Weiterhin ergaben Untersuchungen, dass der Neigungswinkel unter Beugung während eines Gelenkumlaufs Werte annimmt, die sowohl größer als auch kleiner als der Grundneigungswinkel sind. Die Bahnkurven eines erfindungsgemäßen Kugelgleichlaufgelenks sind daher derartig ausgestaltet, dass bei Beugung des Gelenks der Neigungswinkel konstant bleibt. Die Bahnkurven sind insbesondere nicht kreisförmig und nicht aus diskreten Kreiselementen zusammengesetzt, sondern sie besitzen eine sich ständig ändernde Krümmung. Daher ist der stets konstante Neigungswinkel gleich dem Grundneigungswinkel. Der konstante Neigungswinkel unter Beugung ermöglicht die Wahl eines sehr kleinen Grundneigungswinkels, da die Gefahr einer Unterschreitung des Selbsthemmungswinkels nicht besteht. Dies ergibt den Vorteil, dass die resultierenden Neigungskräfte gering bleiben und somit nur geringe Wirkungsgradverluste und Pressungen an den Kontaktpunkten auftreten. Weiterhin lassen sich kleinere radiale Bewegungen der Kugeln bei der Beugung des Gelenks erreichen. Diese kleineren radialen Hübe ermöglichen dünnwandigere Kugelkäfige, wodurch wiederum in der Innen- bzw. Außennabe größere Bahntiefen oder größere Kugeln gewählt werden können.

Eine Ausgestaltung sieht vor, dass die inneren Kugelbahnen jeweils im Wesentlichen vollständig eine entlang der zugeordneten Längsachse sich im Wesentlichen ständig ändernde Krümmung aufweisen. Die ständige Krümmung bezieht sich somit z.B. auch auf Bereiche, in welchen die Kugeln sich nur während der Montage des Gelenks befinden.

Eine Ausgestaltung beinhaltet, dass die äußeren Kugelbahnen jeweils im Wesentlichen vollständig eine entlang der zugeordneten Längsachse sich im Wesentlichen ständig ändernde Krümmung aufweisen. Entsprechendes gilt auch hier für die äußeren Kugelbahnen, deren Krümmung sich über ihren gesamten Verlauf ständig ändert.

Eine Ausgestaltung sieht vor, dass zumindest die aktiven Abschnitte der inneren Kugelbahnen jeweils in einer Ebene mit der zugeordneten Längsachse verlaufen. Die aktiven Kugelbahnen haben somit in ihrem Verlauf keinen seitlichen Versatz, wie z.B. beschrieben in der Patentschrift DE 42 22 205 C2. Eine Ausgestaltung beinhaltet, dass die inneren Kugelbahnen jeweils im Wesentlichen vollständig in einer Ebene mit der zugeordneten Längsachse verlaufen.

Eine Ausgestaltung sieht vor, dass zumindest die aktiven Abschnitte der äußeren Kugelbahnen jeweils in einer Ebene mit der zugeordneten Längsachse verlaufen. Die äußeren Kugelbahnen fluchten in dieser Ausgestaltung mit der Längsachse der Außennabe. Eine Ausgestaltung beinhaltet, dass die äußeren Kugelbahnen jeweils im Wesentlichen vollständig in einer Ebene mit der zugeordneten Längsachse verlaufen.

Eine Ausgestaltung sieht vor, dass die Krümmung der aktiven Abschnitte der inneren Kugelbahnen und die Krümmung der aktiven Abschnitte der äußeren Kugelbahnen der gleichen mathematischen Funktion gehorchen. In dieser Ausgestaltung verlaufen die jeweils paarweise einander zugehörigen Kugelbahnen gleichförmig.

Die Erfindung wird anhand der Figuren näher erläutert. Dabei zeigen:
Fig. 1: einen Schnitt durch ein schematisches Gelenk im ungebeugten Zustand,
Fig. 2: einen Ausschnitt des Gelenks der Fig. 1,
Fig. 3: einen Graphen den Zusammenhang des Neigungswinkels eines Gelenks des Standes der Technik im gebeugten Zustand während eines Umlaufs, und
Fign. 4 und 5: vergrößerte Ausschnitte des Gelenks der Fig. 1 mit unterschiedlichen Beugewinkeln.

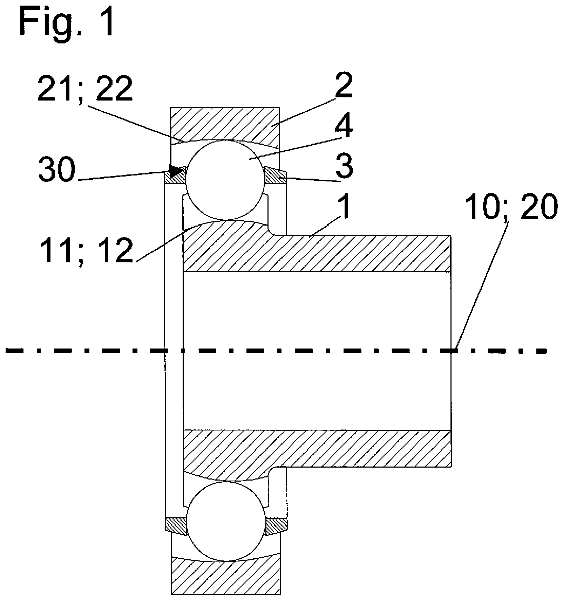

In der Fig. 1 ist ein Schnitt durch ein Gelenk dargestellt. Zwischen der Innennabe 1 und der Außennabe 2 befinden sich Kugeln 4 zur Übertragung des Drehmoments zwischen den beiden Naben 1, 2. Für die Kugeln 4 sind in der Innennabe 1 innere Kugelbahnen 11 und in der Außennabe 2 äußere Kugelbahnen 21 vorgesehen, welche jeweils paarweise eine Kugel 4 aufnehmen. Die Kugeln 4 sind jeweils in einem Fenster 30 des Käfigs 3 angeordnet, welcher sich zwischen der Innennabe 1 und der Außennabe 2 befindet und welcher die Kugeln 4 in einer Ebene hält. In der hier gezeigten Variante fallen jeweils die aktiven Abschnitte 22 der äußeren Kugelbahnen 21 mit den äußeren Kugelbahnen 21 bzw. fallen die aktiven Abschnitte 12 der inneren Kugelbahnen 11 mit den inneren Kugelbahnen 11 zusammen. Dargestellt ist das Gelenk im vollständig gestreckten, d.h. ungebeugten Zustand, in welchem die Längsachse der Außennabe 20 und der Innennabe 10 zusammenfallen. Dies ist somit auch die Längsachse des Gelenks. Je nach Ausgestaltung ist es dabei möglich, dass der Käfig 3 an der Innennabe 1, an der Außennabe 2 oder sowohl an der Innen- 1 als auch an der Außennabe 2 zentriert ist.

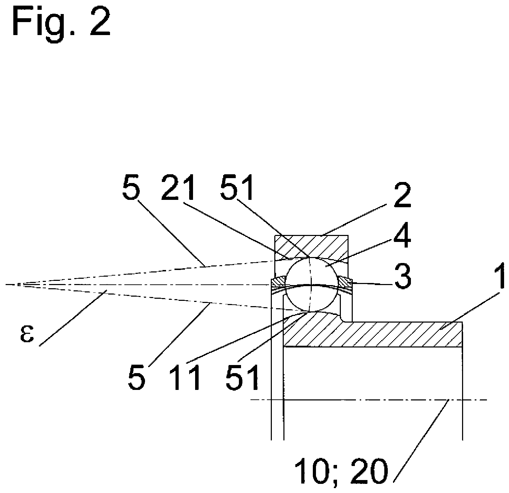

Im Ausschnitt der Fig. 2 sind die Tangentialebenen 5 an den Kontaktpunkten 51 der Kugeln 4 mit den inneren 11 und äußeren Kugelbahnen 21 eingezeichnet. Diese bilden den Neigungswinkel ε. Der Neigungswinkel bewirkt eine innere Axialkraft am Käfig 3. Durch die Beugung wird eine Bewegung im Gelenk bewirkt, wodurch Reibung, Verluste, Verschleiß und Erwärmung auftreten. Dabei gilt, dass mit der Beugung auch die Reibung zunimmt und umgekehrt, dass mit kleinerem Neigungswinkel die Reibung abnimmt. Dabei kann jedoch der Neigungswinkel nicht beliebig verkleinert werden, da bei Neigungswinkeln von etwa 4° das Gelenk durch Selbsthemmung verklemmt. In Übereinstimmung mit dem Stand der Technik gilt, dass der Neigungswinkel gleich dem halben Keilwinkel des Gelenks ist.

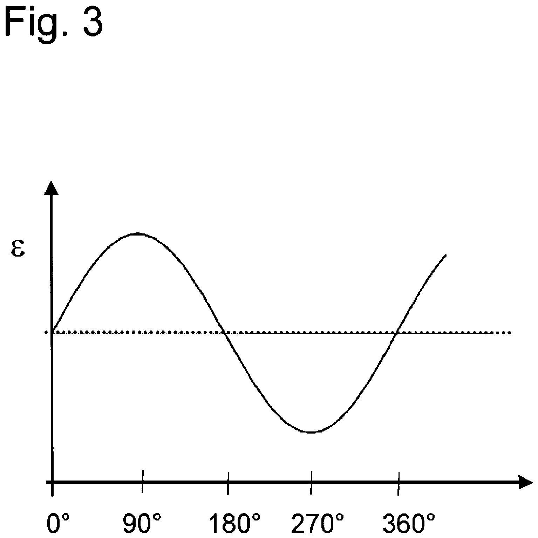

Wie in der Fig. 3 zu erkennen, ändert sich der Neigungswinkel ε (Y-Achse) bei den Gelenken des Standes der Technik in Abhängigkeit vom Beugewinkel des Gelenks (X-Achse). Die jeweiligen Winkel oszillieren dabei um den Grundneigungswinkel des Gelenks, welcher sich aus der Ausgestaltung der Geometrie des Gelenks und dessen Bestandteilen ergibt (vgl. beispielsweise die Schrift DE 202 21 755 U1). Da der Neigungswinkel ε in der Regel größer sein sollte als der Selbsthemmungswinkel, bedingt dieses Verhalten des Winkels bei den Gelenken des Standes der Technik einen relativ großen Grundneigungswinkel. Für einen möglichst guten Wirkungsgrad des Gelenks sollte der Grundneigungswinkel jedoch möglichst klein sein. Für diesen Zweck ist der Neigungswinkel ε des erfindungsgemäßen Gelenks bei jeglicher Beugung gleich.

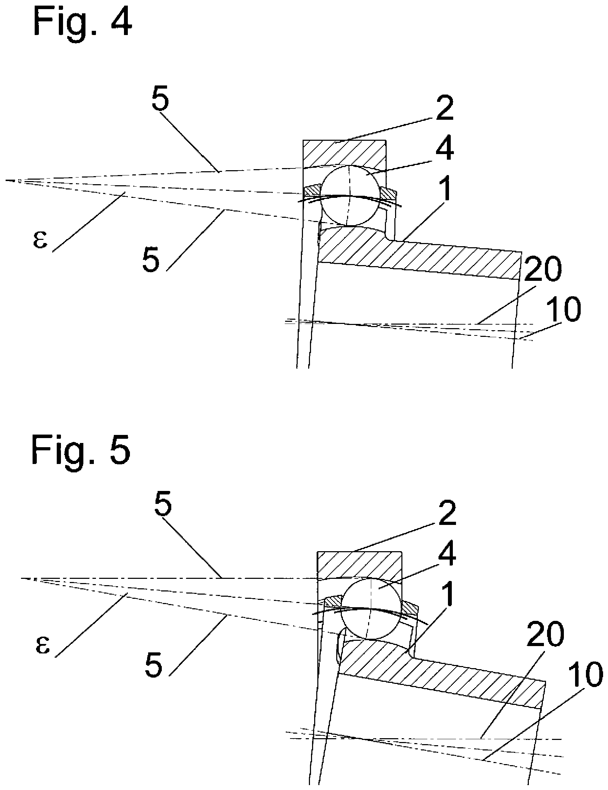

In den Abbildungen Fig. 4 und Fig. 5 ist das Gelenk der Fig. 2 unter zwei unterschiedlichen Beugungen dargestellt, d.h. die Außennabe 2 und die Innennabe 1 sind gegeneinander geneigt. Der Neigungswinkel ε ist unabhängig vom Beugewinkel des Gelenks jeweils der gleiche. Dies lässt sich z.B. dadurch erreichen, dass die Kugelbahnen einer elliptischen Funktion folgen.

Die Kugelbahnen sind in einer Variante hinterschnittfrei ausgestaltet. Die Käfigzentrierung kann insbesondere nur über die Innen- oder nur über die Außen- oder über die Innen- und die Außennabe erfolgen. Hierfür sind ggf. entsprechende Zentrierungsflächen an der Innen- und/oder Außenseite des Käfigs bzw. an der Innen- und/oder Außennabe vorgesehen.

## Patentansprüche

1. Gelenk,
mit einer Innennabe (1), welche eine Längsachse (10) und innere Kugelbahnen (11) aufweist,
mit einer Außennabe (2), welche eine Längsachse (20) und äußere Kugelbahnen (21) aufweist,
wobei die inneren Kugelbahnen (11) und die äußeren Kugelbahnen (21) jeweils paarweise einander zugeordnet sind,
mit einem Käfig (3), welcher umfangsverteilte Fenster (30) aufweist und welcher zwischen der Innennabe (1) und der Außennabe (2) angeordnet ist, und mit Kugeln (4), welche in den Fenstern (30) des Käfigs (3) und in den Paaren der inneren Kugelbahnen (11) und der äußeren Kugelbahnen (21) angeordnet sind und welche von dem Käfig (3) in einer Ebene gehalten werden,
wobei die Tangentialebenen (5) an den Kontaktpunkten (51) der Kugeln (4) mit den inneren Kugelbahnen (11) und den äußeren Kugelbahnen (21) einen Neigungswinkel (ε) bilden,
wobei die inneren Kugelbahnen (11) jeweils einen aktiven Abschnitt (12) aufweisen, in welchem sich die Kugeln (4) bewegen,
wobei die äußeren Kugelbahnen (21) jeweils einen aktiven Abschnitt (22) aufweisen, in welchem sich die Kugeln (4) bewegen,
wobei zumindest die aktiven Abschnitte (12) der inneren Kugelbahnen (11) jeweils eine entlang der zugeordneten Längsachse (10) sich im Wesentlichen ständig ändernde Krümmung aufweisen und
wobei zumindest die aktiven Abschnitte (22) der äußeren Kugelbahnen (21) jeweils eine entlang der zugeordneten Längsachse (20) sich im Wesentlichen ständig ändernde Krümmung aufweisen,
**dadurch gekennzeichnet,**
**dass** die Krümmung der aktiven Abschnitte (12) der inneren Kugelbahnen (11) und die Krümmung der aktiven Abschnitte (22) der äußeren Kugelbahnen (21) derartig ausgestaltet und aufeinander abgestimmt sind, dass der Neigungswinkel (ε) zumindest zwischen den Zuständen des vollständig gestreckten Gelenks und des maximal gebeugten Gelenks im Wesentlichen konstant ist,
wobei die Krümmung zumindest der aktiven Abschnitte (12) der inneren Kugelbahnen (11) und die Krümmung zumindest der aktiven Abschnitte (22) der äußeren Kugelbahnen (21) zumindest annähernd durch eine zumindest stückweise elliptische mathematische Funktion beschreibbar sind.

2. Gelenk nach Anspruch 1,
**dadurch gekennzeichnet,**
**dass** die inneren Kugelbahnen (11) jeweils im Wesentlichen vollständig eine entlang der zugeordneten Längsachse (10) sich im Wesentlichen ständig ändernde Krümmung aufweisen.

3. Gelenk nach Anspruch 1 oder 2,
**dadurch gekennzeichnet,**
**dass** die äußeren Kugelbahnen (21) jeweils im Wesentlichen vollständig eine entlang der zugeordneten Längsachse (20) sich im Wesentlichen ständig ändernde Krümmung aufweisen.

4. Gelenk nach einem der Ansprüche 1 bis 3,
**dadurch gekennzeichnet,**
**dass** zumindest die aktiven Abschnitte (12) der inneren Kugelbahnen (11) jeweils in einer Ebene mit der zugeordneten Längsachse (10) verlaufen.

5. Gelenk nach Anspruch 4,
**dadurch gekennzeichnet,**
**dass** die inneren Kugelbahnen (11) jeweils im Wesentlichen vollständig in einer Ebene mit der zugeordneten Längsachse (10) verlaufen.

6. Gelenk nach einem der Ansprüche 1 bis 5,
**dadurch gekennzeichnet,**
**dass** zumindest die aktiven Abschnitte (22) der äußeren Kugelbahnen (21) jeweils in einer Ebene mit der zugeordneten Längsachse (20) verlaufen.

7. Gelenk nach Anspruch 6,
**dadurch gekennzeichnet,**
**dass** die äußeren Kugelbahnen (21) jeweils im Wesentlichen vollständig in einer Ebene mit der zugeordneten Längsachse (20) verlaufen.

8. Gelenk nach einem der Ansprüche 1 bis 7,
**dadurch gekennzeichnet,**
**dass** die Krümmung der aktiven Abschnitte (12) der inneren Kugelbahnen (11) und die Krümmung der aktiven Abschnitte (22) der äußeren Kugelbahnen (21) der gleichen mathematischen Funktion gehorchen.

## Claims

1. Joint,
with an inner hub (1) which has a longitudinal axis (10) and
inner ball tracks (11),
with an outer hub (2) which has a longitudinal axis (20) and
outer ball tracks (21),
whereby the inner ball tracks (11) and the outer ball tracks (21) are assigned to each other in pairs,
with a cage (3) which has circumferentially distributed windows (30) and which is arranged between the inner hub (1) and the outer hub (2), and with balls (4) which are arranged in the windows (30) of the cage (3) and in the pairs of inner ball tracks (11) and the outer ball tracks (21) and which are held by the cage (3) in one plane,
whereby the tangential planes (5) at the contact points (51) of the balls (4) form an angle of inclination (6) with the inner ball tracks (11) and the outer ball tracks (21),
whereby the inner ball tracks (11) each have an active section (12) in which the balls (4) move,
whereby the outer ball tracks (21) each have an active section (22) in which the balls (4) move,
whereby at least the active sections (12) of the inner ball tracks (11) each have a mainly continuously changing curve along the longitudinal axis (10) and
whereby at least the active sections (22) of the outer ball tracks (21) each have a mainly continuously changing curve along the longitudinal axis (20), **characterized by the fact that**
the curve of the active sections (12) of the inner ball tracks (11) and the curve of the active sections (22) of the outer ball tracks (21)
are so designed and matched to each other that the inclination angle (s) is substantially constant at least between the conditions of the fully extended joint and the maximum bent joint,
whereby the curve of at least the active sections (12) of the inner ball tracks (11) and the curve of at least the active sections (22) of the outer ball tracks (21) can be at least approximately described by at least a piece-by-piece elliptical mathematical function.

2. Joint according to Claim 1,
**characterized by the fact that**
the inner ball tracks (11) each have a mainly continuously changing curve along the longitudinal axis (10).

3. Joint according to Claim 1 or 2,
**characterized by the fact that**
the outer ball tracks (21) each have a mainly continuously changing curve along the longitudinal axis (20).

4. Joint according to one of the Claims 1 to 3,
**characterized by the fact that**
at least the active sections (12) of the inner ball tracks (11) each run in a plane with the associated longitudinal axis (10).

5. Joint according to Claim 4,
**characterized by the fact that**
the inner ball tracks (11) each mainly run completely in one plane with the associated longitudinal axis (10)

6. Joint according to one of the Claims 1 to 5,
**characterized by the fact that**
at least the active sections (22) of the outer ball tracks (21) each run in a plane with the associated longitudinal axis (20).

7. Joint according to Claim 6, **characterized by the fact** that the outer ball tracks (21) each mainly run completely in one plane with the associated longitudinal axis (20).

8. Joint according to one of the Claims 1 to 7,
**characterized by the fact that**
the curve of the active sections (12) of the inner ball tracks (11) and the curve of the active sections (22) of the outer ball tracks (21) obey the same mathematical function.

## Revendications

1. Articulation,
avec un moyeu intérieur (1) qui présente un axe longitudinal (10) et
des chemins de roulement à billes intérieurs (11),
avec un moyeu extérieur (2) qui présente un axe longitudinal (20) et
des chemins de roulement à billes extérieurs (21),
les chemins de roulement à billes intérieurs (11) et les chemins de roulement à billes extérieurs (21) étant disposés par paires les uns par rapport aux autres,
avec une cage (3), qui présente des fenêtres (30) réparties à la périphérie et
qui est disposée entre le moyeu intérieur (1) et le moyeu extérieur (2), et avec des billes (4), qui sont disposées dans les fenêtres (30) de la cage (3) et dans les paires des chemins de roulement à billes intérieurs (11) et des chemins de roulement à billes extérieurs (21), et qui sont maintenues par la cage (3) dans un plan,
les plans tangentiels (5) formant un angle d'inclinaison (6) au niveau des points de contact (51) des billes (4) avec les chemins de roulement à billes intérieurs (11) et les chemins de roulement à billes extérieurs (21),
les chemins de roulement à billes intérieurs (11) présentant chacun une section active (12) dans laquelle se déplacent les billes (4),
les chemins de roulement à billes extérieurs (21) présentant chacun une section active (22) dans laquelle se déplacent les billes (4),
au moins les sections actives (12) des chemins de roulement à billes intérieurs (11) présentant chacune une courbure variant essentiellement en permanence, le long de l'axe longitudinal (10) attribué, et
au moins les sections actives (22) des chemins de roulement à billes extérieurs (21) présentant chacune une courbure variant essentiellement en permanence, le long de l'axe longitudinal (20) attribué,
**caractérisée en ce que**
la courbure des sections actives (12) des chemins de roulement à billes intérieurs (11) et la courbure des sections actives (22) des chemins de roulement à billes extérieurs (21)
sont configurées et adaptées entre elles de sorte que l'angle d'inclinaison (s) soit essentiellement constant, au moins entre les états de l'articulation entièrement étirée et de l'articulation inclinée au maximum,
la courbure d'au moins les sections actives (12) des chemins de roulement à billes intérieurs (11) et la courbure d'au moins les sections actives (22) des chemins de roulement à billes extérieurs (21) pouvant être décrites, approximativement au moins, par une fonction mathématique elliptique partiellement au moins.

2. Articulation selon revendication 1,
**caractérisée en ce que**
les chemins de roulement à billes intérieurs (11) présentent chacun de façon essentiellement complète une courbure variant essentiellement en permanence, le long de l'axe longitudinal (10) attribué.

3. Articulation selon revendication 1 ou 2,
**caractérisée en ce que**
les chemins de roulement à billes extérieurs (21) présentent chacun de façon essentiellement complète une courbure variant essentiellement en permanence, le long de l'axe longitudinal (20) attribué.

4. Articulation selon l'une des revendications 1 à 3,
**caractérisée en ce que**
au moins les sections actives (12) des chemins de roulement à billes intérieurs (11) évoluent chacune dans un plan formé avec l'axe longitudinal (10) attribué.

5. Articulation selon revendication 4,
**caractérisée en ce que**
les chemins de roulement à billes intérieurs (11) évoluent chacun de façon essentiellement complète dans un plan formé avec l'axe longitudinal (10) attribué_

6. Articulation selon l'une des revendications 1 à 5, **caractérisée en ce que**
au moins les sections actives (22) des chemins de roulement à billes extérieurs (21) évoluent chacune dans un plan formé avec l'axe longitudinal (20) attribué.

7. Articulation selon revendication 6, **caractérisée en ce que** les chemins de roulement à billes extérieurs (21) évoluent chacun de façon essentiellement complète dans un plan formé avec l'axe longitudinal (20) attribué.

8. Articulation selon l'une des revendications 1 à 7,
**caractérisée en ce que**
la courbure des sections actives (12) des chemins de roulement à billes intérieurs (11) et la courbure des sections actives (22) des chemins de roulement à billes extérieurs (21) obéissent à la même fonction mathématique.
